# EUROPÄISCHE PATENTANMELDUNG

(11) **EP 4 413 871 A2**
(43) Veröffentlichungstag der Anmeldung: **14.08.2024**
(21) Anmeldenummer: 24183976.0
(22) Anmeldetag: 17.02.2015
(51) Int. Cl.: A23L 7/117

(54) **VERFAHREN ZUR HERSTELLUNG VON AROMATISIERTEN NAHRUNGSMITTELPARTIKELN**

(62) Teilanmeldung aus: 15155416.9
(71) Anmelder: Symrise AG, 37603 Holzminden Niedersachsen (DE)
(72) Erfinder: HILMER, Jens-Michael, 37603 Holzminden (DE); GRUBER, Eric, 37603 Holzminden (DE); SCHRADER, Dirk, 37603 Holzminden (DE); BRÖCKEL, Walter, 37639 Bevern (DE)
(74) Vertreter: Soilan Rodriguez, Jose David

(57) **Zusammenfassung**

Die vorliegende Erfindung befindet sich auf dem Gebiet der Aromatisierung von Lebensmitteln. Insbesondere ist die vorliegende Erfindung auf ein Verfahren zum Verkapseln von Aromastoffen und/oder Aromen gerichtet. Die Partikel werden dann später in der Endzubereitung (das Lebensmittel), wie beispielsweise Instantkaffee, eingearbeitet. Der Fokus liegt insbesondere darin, zum einen Partikel mit hoher Aromabeladung zu erhalten, um einen langanhaltenden Aromaschutz während der Lagerung zu gewährleisten und zum anderen die Partikeleigenschaften so zu steuern, dass eine optimale Mischbarkeit der Partikel mit Lebensmitteln ermöglicht wird. Entscheidend sind hierbei vor allem Form, Größe und Partikeldichte. Diese Aspekte zusammen sollen beim Endverbraucher beim Verzehr der Partikel ein verbessertes Geschmackserlebnis bewirken.

## Beschreibung

### GEBIET DER ERFINDUNG

Die vorliegende Erfindung befindet sich auf dem Gebiet der Aromatisierung von Lebensmitteln. Insbesondere ist die vorliegende Erfindung auf ein Verfahren zum Verkapseln von Aromastoffen und/oder Aromen gerichtet. Die Partikel werden dann später in der Endzubereitung (das Lebensmittel), wie beispielsweise Instantkaffee, eingearbeitet. Der Fokus liegt insbesondere darin, zum einen Partikel mit hoher Aromabeladung zu erhalten, um einen langanhaltenden Aromaschutz während der Lagerung zu gewährleisten und zum anderen die Partikeleigenschaften so zu steuern, dass eine optimale Mischbarkeit der Partikel mit Lebensmitteln ermöglicht wird. Entscheidend sind hierbei vor allem Form, Größe und Partikeldichte. Diese Aspekte zusammen sollen beim Endverbraucher beim Verzehr der Partikel ein verbessertes Geschmackserlebnis bewirken.

### STAND DER TECHNIK

Bei Nahrungs- und Lebensmitteln werden zur Abrundung des Geschmacksprofils, oftmals Aromen zugesetzt. Hierbei ist es erwünscht, dass die Aromen möglichst lange im Lebensmittel stabil verbleiben und erst beim Verzehr des Verbrauchers freigesetzt werden und nicht während der Lagerung verloren gehen.

Bei der Herstellung von Instant-Kaffee wurde daher beispielsweise versucht Kaffee-Aroma, insbesondere das Röstaroma von Kaffee, durch Aufsprühen einer Emulsion, welche Kaffee-Öl enthält, auf getrocknetem Kaffee-Extrakt aufzubringen. Oftmals verhält es sich bei aromatisiertem Instantkaffee jedoch so, dass nach der Öffnung des Behälters, in dem der Instantkaffe gelagert ist, die Aromastoffe sich allzu rasch verflüchtigen.

Um Aromaverluste möglichst gering zu halten und zu reduzieren, werden die aromatischen Bestandteile oftmals verkapselt.

In EP2233013 B1 wird ein Verfahren zur Herstellung von Körnern beschichteten Kaffeemehls offenbart. Das Verfahren umfasst (i) das Erwärmen eines Gemisches aus einer Beschichtungszusammensetzung und Kaffeemehl auf einer Temperatur unter der Schmelztemperatur der Beschichtungszusammensetzung, bei der die Beschichtungszusammensetzung eine Beschichtung auf zumindest einem Teil des Kaffeemehls bildet; und (ii) das Abkühlen des Gemisches zur Bereitstellung von Körnen, die Kaffeemehl umfassen, das eine auf zumindest einem Teil der Oberfläche des Kaffeemehls ausgebildete Beschichtung aus der Beschichtungszusammensetzung aufweist.

WO0249450 offenbart den Ersatz von Kaffee-Öl durch ein verkapseltes Aroma in einem Instant-Kaffeegetränk. Dabei wird ein nicht-wasserlöslicher Aromaträger (Aromalösemittel) mit Aroma verkapselt, der das Aroma bei Freisetzung als ein auf der Oberfläche des aufgegossenen Kaffees aufschwimmender Film freisetzen soll.

US3989852 offenbart die Erstellung einer hochviskosen Sprühmatrix, die dann durch eine Düse auf ein gerührtes Pulver gesprüht wird, das aus einem Filmbildner wie beispielsweise Gummi Arabicum besteht. Auf diese Weise entsteht ein pulverförmiges Produkt mit aromatisierenden Eigenschaften.

US 5496574 beschreibt einen Prozess zur Verkapselung eines Aromas für Getränkeanwendungen. Dazu wird Kaffeeöl hydrolysiert und dann in Form einer Öl-in-Wasser-Emulsion (bestehend aus hydrolysiertem Pflanzenöl, wasserlösliche Filmbildner) auf ein lösliches Getränkepulver (z.B. Kaffeepulver) gesprüht.

US4520033 (Nestec 1985) beschreibt die Herstellung einer aufgeschäumten Aromakapsel. Dafür wird zunächst eine Aromaemulsion hergestellt, die dann in einem zweiten Schritt durch das Einleiten eines Gases wie beispielsweise Stickstoff aufgeschäumt wird. Diese aufgeschäumte Aromaemulsion wird dann auf ein Pulver wie beispielsweise Kaffeepulver aufgesprüht und im Mixer gerührt. Das resultierende Pulver lässt sich dann in ein Getränkepulver wie beispielsweise Instantkaffee einmischen.

Ein Problem bei einer Kaffeezusammensetzung, die mehr als nur eine einzige Kaffee Komponente umfasst ist, dass im Laufe der Zeit die einzelnen Komponenten der Kaffeezusammensetzung segregieren. Dies ist oftmals das Ergebnis, wenn die Kaffeezusammensetzung in einem Behälter lange Zeit gelagert wird und die kleinen Partikeln oder dichteren Komponenten sich dann am Boden des Behälters absetzen, während leichtere bzw. weniger dichtere Komponenten im oberen Teil des Behälters verbleiben. Der Endverbraucher merkt dies durch eine verminderte Konzentration (bzw. Geschmack) von einer Geschmackskomponente, so dass das Geschmacksprofil nicht mehr rund erscheint.

Aufgabe der vorliegenden Erfindung bestand daher darin, ein Verfahren zum Verkapseln von Aromen auf Partikeln, insbesondere Lebensmittelpartikeln, zu entwickeln, welches das Problem der Segregation im Endprodukt vermindert bzw. löst. Zudem war es Aufgabe der vorliegenden Erfindung ein Verfahren zu entwickeln, aus dem Partikel mit bestimmten Größen (Körnung) resultieren, die im Endprodukt eine homogene Mischung mit den weiteren Lebensmittelpartikeln im Produkt aufweisen, um so der Segregation entgegen zu wirken. Beispielsweise sollen die Aromen, die auf Kaffee-Partikeln aufgebracht werden, zu Partikelgrößen (Körnung) führen, die im Endergebnis in einer Kaffee-Instantzusammensetzung eine homogene Mischung mit den weiteren in der Instantzusammensetzung enthaltenen Partikeln führen. Ferner sollen die Partikel aus dem Verfahren eine gute Löslichkeit und eine hohe Aromabeladung aufweisen, um eine langanhaltende Aromafreisetzung während des Verzehrs beim Endverbraucher, und so ein verbessertes Geschmackserlebnis zu bewirken und um eine verbesserte Aromawahrnehmung und ggf. ein überraschendes Geschmackserlebnis beim Verzehr zu erzeugen.

### BESCHREIBUNG DER ERFINDUNG

Gegenstand der Erfindung ist ein Verfahren zum Verkapseln von Aromastoffen und / oder Aromen auf Lebensmittelpartikeln umfassend die Schritte:
(i) Bereitstellung einer Emulsion, umfassend mindestens ein Aromastoff und/ oder Aroma und weitere übliche Inhaltsstoffe,
(ii) Aufbringen der Emulsion auf die Lebensmittelpartikeln mittels Sprühen,
(iii) Trocknen der Partikel im Luftstrom,
wobei die Schüttdichte der Partikel durch das Coating (Schritt ii) um 5-50%, bevorzugt 10-25% zunimmt.

Als Schüttdichte pSch oder auch sog. Stampfdichte, sowie umgangssprachlich auch "Schüttgewicht" bekannt, bezeichnet man die Dichte, d. h. die Masse pro Volumen, eines Gemenges aus einem körnigen Feststoff ("Schüttgut") und einem kontinuierlichen Fluid, welches die Hohlräume zwischen den Partikeln ausfüllt. Das Fluid kann auch Luft sein. Die einzelnen Komponenten dürfen sich nicht ineinander lösen.

In einer weiteren Ausführungsform des erfindungsgemäßen Verfahrens wird die Emulsion durch eine oder mehrere Düsen, bevorzugt aus einer oder mehreren Zweistoffdüsen auf die Lebensmittelpartikeln aufgesprüht, wobei der mittlere Tröpfchengrößendurchmesser der Tröpfchen, die aus der Düse treten, kleiner als 0,3 mm beträgt. Bevorzugt liegt der mittlere Tröpfchengrößendurchmesser bei 0,05 mm - 0,1 mm. Dadurch kann eine Agglomeration der Partikel minimiert werden und eine schnelle Trocknung wird durch die große Oberfläche ermöglicht.

Überraschenderweise zeigte es sich, dass die Partikelgrößen der so hergestellten Partikel, insbesondere bei der Schüttdichte, optimal für das Endprodukt eingestellt werden konnten, so dass diese sich in einer Mischung aus unterschiedlichen (Lebensmittel-) Partikeln, wie beispielsweise in Instantpulverprodukten, homogen untermischen lassen. Dies hat den Vorteil, dass Segregation der Partikeln vermieden werden kann. Zudem hat es den Vorteil, dass das Geschmacksprofil der Zusammensetzung homogen für den Verbraucher ist, und sich nicht eine Aromakomponente unerwünscht an einer Stelle im Lebensmittel kumuliert.

Der Begriff "Lebensmittel" bzw. "Nahrungsmittel" umfasst insbesondere Produkte, die gemäß der VERORDNUNG (EG) Nr. 178/2002 DES EUROPÄISCHEN PARLAMENTS UND DES RATES vom 28. Januar 2002 Lebensmittel sind. Gemäß dieser Verordnung sind "Lebensmittel" alle Stoffe oder Erzeugnisse, die dazu bestimmt sind oder von denen nach vernünftigem Ermessen erwartet werden kann, dass sie in verarbeitetem, teilweise verarbeitetem oder unverarbeitetem Zustand von Menschen aufgenommen werden.

In einer weiteren Ausführungsform des erfindungsgemäßen Verfahrens umfasst die Emulsion optional Filmbildner, welche in einer Konzentration von weniger als 20 Gew.%, vorzugsweise weniger als 10 Gew.%, besonders bevorzugt weniger als 1 Gew.% in der Emulsion vorliegen.

In einer weiteren Ausführungsform des erfindungsgemäßen Verfahrens umfasst die Emulsion keinen Filmbildner. Dadurch kann für eine Anwendung, bei der beispielsweise eine Schaumbildung negativ beim Verbraucher wahrgenommen würde, diese vermindert werden.

In einer weiteren Ausführungsform des erfindungsgemäßen Verfahrens, beträgt die Verfahrenstemperatur bei der Trocknung 20°C bis 150°C. Die bei diesen Temperaturen hergestellten Partikel weisen eine optimale Partikelgröße und Beladung der Aromastoffe bzw. Aromen auf.

In einer weiteren Ausführungsform des erfindungsgemäßen Verfahrens handelt es sich bei den Lebensmittelpartikeln vorzugsweise um gefriergetrocknete Partikel. Vorzugsweise handelt sich insbesondere bei den gefriergetrockneten Partikeln um Gemüse, Früchte, Kaffeepartikel, Tee, Cerealien usw. Desweiteren können ebenfalls trockene und stückige Lebensmittel wie Nudeln, Reis etc. eingesetzt und so gecoatet werden.

Die so aromatisierten Partikel werden dann bevorzugt in Endprodukten wie Instantkaffee, Instantgetränke, Müsli, Cerealien, Müsliriegel, Teebeutel, loser Tee, Trockensuppen, Nudeln, Reis usw. eingearbeitet. Ebenfalls können die aromatisierten Partikel in Kaugummis, Mundpflegeprodukten, Medizinprodukten, Nahrungsergänzungsmittel, Babynahrung usw., sowie in Tierfutter und Futtermittel eingesetzt werden.

Ein Vorteil bei diesem Verfahren durch die Verwendung von gefriergetrockneten Lebensmittelpartikeln ist, das bessere Aufziehen der Aromastoffe bzw. Aromen auf die Partikel und die leichtere Handhabbarkeit der Rohstoffe.

Überraschenderweise zeigte es sich ferner, dass die so hergestellten Partikel eine hohe Aromabeladung aufweisen. Diese kann in der Sprüh-Lösung bzw. Sprüh-Emulsion 10-50 Gew.%, bevorzugt 15-35 Gew.% betragen. Eine hohe Aromabeladung ist besonders vorteilhaft, um eine langanhaltende Aromafreisetzung während des Verzehrs beim Endverbraucher, und so ein verbessertes Geschmackserlebnis zu bewirken und um eine verbesserte Aromawahrnehmung und ggf. ein überraschendes Geschmackserlebnis beim Verzehr zu erzeugen.

Demgemäß besteht eine weiteren Ausführungsform des erfindungsgemäßen Verfahrens darin, dass die Beladung eines aromatisierten Lebensmittepartikels nach dem Verkapseln mindestens 10-70 Gew.%, vorzugsweise mindestens 12-50 Gew.%, und insbesondere mindestens 15-25 Gew.% beträgt.

In einer weiteren Ausführungsform des erfindungsgemäßen Verfahrens handelt es sich bei dem Verfahren um eine Sprühverkapselung, eine Sprühgranulation und/ oder ein Sprüh-Coating.

Die genannten Verfahren bieten die Möglichkeit, die gewünschten Parameter (Temperatur, Schüttdichte etc.) zur Herstellung der Partikel so einzustellen, dass Partikel mit hoher Aromabeladung erhalten werden.

Währen das Aufbringen eines Flüssigaromas auf Lebensmittel (oder Futtermittel), wie beispielsweise auf gefriergetrockneten Kaffee, nur in sehr niedriger Dosierung (z.B. 1-2 Gew.%) möglich ist, da ansonsten die Partikel in ihrer Struktur und ihrem Aussehen verändert werden, erlaubt es das vorliegende erfindungsgemäße Verfahren, erheblich höhere Aromabeladungen zu realisieren, ohne dass das Lebensmittel (oder Futtermittel) maßgebliche negative Veränderungen aufweist.

In einer weiteren Ausführungsform des erfindungsgemäßen Verfahrens handelt es sich bei den verkapselten Aromastoffen und / oder Aromen um eine Aromamischung aus mindestens zwei Aromastoffe und/ oder Aromen. Vorzugsweise handelt es sich um ein Gemisch aus mindestens drei, vier oder mehr als fünf Aromastoffen und / oder Aromen. Zumeist handelt es sich bei Aromagemischen um eine Mischung aus vielen Aromastoffen / und oder Aromen. Dies hat den Vorteil, dass so auf das Geschmacksprofil der Zusammensetzung Einfluss genommen werden kann.

Geeignete Aromastoffe für die Herstellung der Partikel der vorliegenden Erfindung sind vorzugsweise zu finden in z.B. "Riechstoffe", in Steffen Arctander, in "Perfume and Flavor Chemicals", Eigenverlag, Montclair, N. J. 1969; H. Surburg, J. Panten, in "Common Fragrance and Flavor Materials", 5th Edition, Wiley-VCH, Weinheim 2006. Es seien beispielsweise genannt: Ester (gesättigt oder ungesättigt) wie z. B. Ethylbutyrat, Allylcapronat, Benzylacetat, Methylsalicylat; organische Säuren (gesättigt und ungesättigt) wie z. B. Buttersäure, Essigsäure, Methylbuttersäure, Capronsäure; Alkohole (gesättigt und ungesättigt) wie z. B. Ethanol, Propylenglykol, Octenol, cis-3-Hexanol, Benzylalkohol, Phenylethylalkohol; Aldehyde (gesättigt und ungesättigt) wie z. B. Acetaldehyd, Isobutyraldehyd, Nonadienal, Benzaldehyd, 3-Phenylacetaldehyd; Ketone wie z. B. Menthon; Ether wie z. B. 4-Hydroxy-5-methylfuranon, 3-Hydroxy- 4,5-dimethyl-2-(5H)-furanon, 2,5-Dimethyl-3-hydroxy-2(3H)-furanon, 2(5)-Ethyl-4- hydroxy-5(2)-methyl-3(2H)-furanon, p-Methoxybenzaldehyd, Guajacol, Methoxyvinylphenol; Acetale wie z. B. Acetaldehyddiethylacetal; Lactone wie z. B. gamma- Decalacton; Terpene wie z. B. Limonen, Linalool, Terpinen, Terpineol, Citral (Geranial und Neral), Menthol; Sulfide und Disulfide wie z. B. Dimethylsulfid, Difurfuryldisulfid, Methylthiopropanal; Thiole wie z. B. Methylfuranthiol; Pyrazine und Pyrroline wie z. B. Methylpyrazin, Acetylpyrazin, 2-Propionylpyrrolin, 2-Acetylpyrrolin, Acetophenon, Allylcapronat, alpha-lonon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion^{®}), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

Vorteilhafterweise umfasst eine Emulsion zur Verkapselung mehrere Inhaltstoffe, die einen Beitrag zur Stabilität, Form, Farbe, Rheologie usw. beitragen. Demgemäß besteht eine weitere Ausführungsform des erfindungsgemäßen Verfahrens darin, dass die weiteren üblichen Inhaltstoffe ausgewählt sind aus der Gruppe bestehend aus Farbstoffen, Süßungsmittel, Füllstoffen, Puffern, Pflanzenextrakten, Kaffeeweißer, Bleichmittel, Nahrungsergänzungsmitteln (Mineralien, Ballaststoffe), Sacchariden, Tee-Extrakte, Kakao usw.

### Gewerbliche Anwendbarkeit

Gegenstand der vorliegenden Erfindung sind auch aromatisierte Lebensmittelpartikel oder Futtermittelpartikel, erhältlich durch das erfindungsgemäße Verfahren, welches oben beschrieben ist, und das die Schritte umfasst:
(i) Bereitstellung einer Emulsion, umfassend mindestens ein Aromastoff und/oder Aroma und weitere übliche Inhaltsstoffe,
(ii) Aufbringen der Emulsion auf Lebensmittelpartikel oder Futtermittelpartikel,
(iii) Trocknen der Partikel im Luftstrom,
wobei die Schüttdichte der Partikel durch das Coating (Schritt ii) um maximal 5-50%, bevorzugt um maximal 5-25% zunimmt.

In einer weiteren Ausführungsform der vorliegenden Erfindung werden die so hergestellten aromatisierten Lebensmittelpartikeln in Endprodukten wie Instantkaffee, Instantgetränke, Teeblätter (lose oder in Teebeuteln), Früchte, Müsli, Trockensuppen (Tütensuppen), Cornflakes, Popcorn, Reis, Nudeln usw. eingearbeitet. Ebenfalls können die aromatisierten Partikeln in Kaugummis, Mundpflegeprodukten, Medizinprodukten, Nahrungsergänzungsmitteln, Babynahrung usw., sowie in Tierfutter und Futtermittel eingesetzt werden.

Die so hergestellten aromatisierten Partikel (wie beispielweise Lebensmittel- oder Futtermittelpartikel) weisen Eigenschaften auf, die die Nachteile der Segregation und niedrige Aromabeladung verbessern bzw. vermindern. Insbesondere lässt sich das erfindungsgemäße Verfahren vorteilhafterweise für Kaffeepartikel durchführen. Hierbei werden besonders gefriergetrocknete Kaffeepartikel eingesetzt und die Aromaemulsion darauf gesprüht.

Demgemäß sind ein weiterer Gegenstand der vorliegenden Erfindung insbesondere aromatisierte Kaffeepartikel erhältlich nach dem vorgenannten Verfahren. Hierbei ist eine bevorzugte Ausführungsform Instantkaffee, umfassend die erfindungsgemäßen aromatisierten Kaffeepartikeln.

### BEISPIELE

### Aromaemulsion zur Verkapselung

**Tabelle 1: Aromaemulsion A**

| Inhaltsstoffe | Gew.% |
|---|---|
| Wasser | 35,5 |
| Gummi Arabicum | 7,2 |
| Maltodextrin | 21,5 |
| Vanillin | 28,6 |
| Karamellaroma | 7,2 |

**Tabelle 2: Aromaemulsion B**

| Inhaltsstoffe | Gew.% |
|---|---|
| Wasser | 38,8 |
| Kakao | 41,6 |
| Vanillin | 11,2 |
| Kakaoaroma | 8,4 |

### Verkapselung von Lebensmittelpartikeln

Es wurden Partikel, speziell Lebensmittepartikel, speziell Kaffeepartikel, mit der Aromaemulsion A und B beschichtet. Die gefriergetrockneten Kaffeepartikeln werden beispielsweise in einer Wirbelschicht fluidisiert und anschließend mit der Aromaemulsion A bzw. B mittels einer oder mehrerer Düsen besprüht. Durch die im Wirbelbett vorherrschende Temperatur (unterhalb der Schmelz- bzw. Glasübergangstemperatur der wesentlichen Emulsionsbestandteile) wird die wässrige Aromaemulsion getrocknet, so dass sich eine Beschichtungsschicht um die gefriergetrockneten Kaffeepartikel bildet. Diese wird durch Zugabe von farbgebenden Komponenten (wie Farbstoffe und/oder Pflanzenextrakten) in der Weise eingefärbt, dass das Produkt dem eingesetzten gefriergetrockneten Kaffeegranulat entspricht.
Die Partikel wurden mit einer Aeromatic Strea1, bei 80°C Zulufttemperatur und einer Trocknungsluftmenge von 80m3/h hergestellt. Die Zugabe der Sprühemulsion erfolgte dabei mit einer Rate von 26 g/min.

### Bestimmung der Aromabeladung

Die Aromabeladung wird nach dem Stand der Technik sowohl sensorisch als auch analytisch bestimmt.
Für die Bestimmung der analytischen Aromabeladung wird zunächst eine dem Stand der Technik entsprechende Probenvorbereitung, beispielsweise per Extraktion vorgenommen. Anschließend wird dieser Extrakt entsprechend analysiert. Die Analyse kann gemäß mittels der gängigen Verfahren, wie beispielsweise mittels Hochdruckchromatographie oder Gaschromatographie erfolgen.
Im vorliegenden Beispiel wurden Teepartikel mit einer Aromaemulsion entsprechend dem erfindungsgemäßen Verfahren gecoatet. In regelmäßigen Abständen wurden dabei für die Analyse Proben entnommen. Analysiert wurden die Teepartikel auf die im Aroma enthaltenen Aromastoffe semiquantitativ unter Verwendung eines internen Standards (2-Nonanol). Folgende Konzentrationen an Aromastoffen konnten bei dem gecoateten Tee analysiert werden:

**Tabelle 3: Bestimmung Aromabeladung auf Teepartikel**

| Probe | Aromastoffe ppm |
|---|---|
| 1 | 22.7 |
| 2 | 25.9 |
| 3 | 20.2 |
| 4 | 24.2 |
| 5 | 25.3 |
| 6 | 26.6 |
| 7 | 22.6 |
| 8 | 29.7 |
| 9 | 23.2 |
| 10 | 25.6 |

### Bestimmung der Stampfdichte

Die Stampfdichte der erfindungsgemäßen Aromapartikeln wurde mittels eines Stampfvolumeters (STAV-II, Engelsmann) nach DIN 53194 bestimmt. Als Vergleich dient die entsprechende Stampfdichte des ungecoateten Lebensmittels, in diesem Fall gefriergetrockneter Kaffee.

**Tabelle 4: Stampfdichte von erfindungsgemäßen Aromapartikel**

| | |
|---|---|
| Gefriergetrockneter Kaffee | 260-280 g/ l |
| Aromapartikel | 270-310 g/l |

### Segregationstest

Die Beobachtung des Segregationsverhaltens von gecoatetem, gefriergetrocknetem Kaffee wurde mittels eines Stampfvolumeters. Dazu wurden die Aromapartikel (z.B. gecoateter gefriergetockneter Kaffee) 10% mit Lebensmittelpartikeln (z.B. gefriergetockneter Kaffee) gemischt und nach 1250 Hüben zu 2 cm, optisch beurteilt.
Als Vergleich dient eine Abmischung von gefriergetrocknetem Kaffee mit herkömmlich verkapselten Karamelaroma-Partikeln (beispielsweise sprühgetrocknet, wirbelschichtgranuliert, extrudiert, kompaktiert, walzgetrocknet).

**Tabelle 5: Ergebnisse des Segregationstests**

| verkapselte Aromapartikel | erfindungsge mäß | sprühget rocknet | wirbelschi chtgranuli ert | extrudie rt | Kompakti ert | walzenge trocknet |
|---|---|---|---|---|---|---|
| Typischer Partikeldurchme sser [mm] | 0.5-4.0 | 0.05-0.3 | 0.1-1.2 | 0.1-4.0 | 1.0-3.5 | 0.5-4.0 |
| Ergebnis nach Segregationstes t | homogen | inhomog en, mit Bodensat z | inhomoge n, mit Bodensatz | inhomo gen, mit Bodens atz | inhomog en, teilweise Anreiche rung | inhomog en |

### Stabiliätstest und sensorische Tests

A) Für die sensorische Evaluierung wurden die gecoateten Partikel gegen die entsprechende Menge an Flüssigaroma in einem Expertenpanel mit 7 Probanden verkostet. Dazu wurden die aromatisierten Partikel bzw. das Flüssigaroma in der Endapplikation eingearbeitet und diese dann beurteilt. Die Ergebnisse geben den Durchschnittswert der 7 Probanden wieder und sind in Tabelle 6 zusammengefasst.
B) Die Lagerfähigkeit der aromatisierten, gecoateten Partikeln (z.B. gefriergetrockneter Kaffee) wurde mittels Echtzeittests über einen Zeitraum von 12 Monaten bestimmt.
Dazu wurden jeweils bei Raumtemperatur und minus 18°C gelagerte Proben und Referenzmuster gegeneinander im Expertenpanel sensorisch verglichen. Dazu wurden die aromatisierten Lebensmittelpartikel (gecoateter gefriergetrockneter Kaffee) mit einer Dosierung von 10% mit den entsprechend nicht-aromatisierten Lebensmittelpartikeln (gefriergetrockneter Kaffee) homogen vermischt. Davon werden 1g auf 100 ml ca. 80°C heißem Wasser/Milchgemisch (80% Wasser, 20% Milch mit 1,5 % Fettgehalt) gelöst und verkostet.
Weiterhin wurden die gecoateten Partikel gegen Partikel, auf die ein entsprechendes Aroma (Flüssigaroma) aufgesprüht wurde, sensorisch verglichen (= Standard). Zur Herstellung des Standards wurde das entsprechende Aroma (beispielsweise Kakaoaroma) mit einer Dosierung von 2% auf das Lebensmittel (beispielsweise gefriergetrockneter Kaffee) aufgesprüht. Die weitere Zubereitung mit Kaffeegetränk erfolgt wie oben beschrieben.
Überraschenderweise konnte festgestellt werden, dass die erfindungsgemäß hergestellten Partikel keine sensorischen Einbußen aufwiesen, während demgegenüber die flüssig aromatisierten Lebensmittelpartikeln nach wenigen Monaten Fehlnoten und abnehmende Geschmacksintensität aufzeigten.

**Tabelle 6: Ergebnisse des Stabilitätstests und sensorischen Tests**

| Partikel | Lagerzeit = 12 Monate | |
|---|---|---|
| | Geschmacknote | Aromaeindruck |
| mit Aromaemulsion A bei RT gelagert | Kaffee, Karamell | Intensiv |
| mit Aromaemulsion A bei - 18°C gelagert | Kaffee, Karamell | intensiv |
| Standard A bei RT gelagert | Deutliche Fehlnoten, gummiartig | deutliche geringere Intensität |
| mit Aromaemulsion B bei RT gelagert | Kaffee, Karamell | intensiv |
| mit Aromaemulsion B bei - 18°C gelagert | Kaffee, Karamell | intensiv |
| Standard B bei RT gelagert | Deutliche Fehlnoten, gummiartig, ranzig | deutliche geringere Intensität |

| | | |
|---|---|---|
| RT= Raumtemperatur | | |

## Patentansprüche

1. Verfahren zum Sprüh-Coating von Aromen auf Lebensmittelpartikeln umfassend die Schritte:
(i) Bereitstellung einer Emulsion, umfassend mindestens einen Aromastoff und/oder Aroma und weitere übliche Inhaltsstoffe, wobei der Anteil der Aromastoffe und/oder Aromen an der Emulsion 35 bis 50 Gew.-% ausmacht,
(ii) Bereitstellen von Teepartikeln;
(iii) Aufbringen der Emulsion auf die Teepartikel mittels Sprühen, wobei die Emulsion aus einer oder mehreren Zweistoffdüsen auf die Teepartikel aufgesprüht wird und der mittlere Tröpfchengrößendurchmesser der Tröpfchen, die aus der Düse treten, in einem Bereich von 0,05 mm bis 0,3 mm liegt,
(iv) Trocknen der Partikel im Luftstrom,
wobei die Schüttdichte der Partikel durch das Coating (Schritt iii) um maximal 5-50% zunimmt.

2. Verfahren nach Anspruch 1, **dadurch gekennzeichnet, dass** die Emulsion optional Filmbildner umfasst, welche in einer Konzentration von weniger als 20 Gew.-% in der Emulsion liegt.

3. Verfahren nach den Ansprüchen 1 und/oder 2, **dadurch gekennzeichnet, dass** die Emulsion keinen Filmbildner umfasst.

4. Verfahren nach mindestens einem der Ansprüche 1 bis 3, **dadurch gekennzeichnet, dass** die Verfahrenstemperatur bei der Trocknung etwa 20°C bis etwa 150°C beträgt.

5. Verfahren nach mindestens einem der Ansprüche 1 bis 4, **dadurch gekennzeichnet, dass** es sich bei den Teepartikeln um gefriergetrocknete Partikel handelt.

6. Verfahren nach mindestens einem der Ansprüche 1 bis 5, **dadurch gekennzeichnet, dass** die Beladung der Teepartikel nach dem Sprüh-Coating bis zu 60 Gew.-% - bezogen auf die Partikel- beträgt.

7. Verfahren nach mindestens einem der Ansprüche 1 bis 6, **dadurch gekennzeichnet, dass** die Schüttdichte der Partikel durch das Sprühcoating um maximal 25 % zunimmt.

8. Verfahren nach mindestens einem der Ansprüche 1 bis 7, **dadurch gekennzeichnet, dass** die verkapselten Aromastoffe und / oder Aromen eine Aromamischung aus mindestens zwei Aromastoffen und/ oder Aromen ist.

9. Verfahren nach mindestens einem der Ansprüche 1 bis 8, **dadurch gekennzeichnet, dass** die weiteren üblichen Inhaltstoffe ausgewählt sind aus der Gruppe bestehen aus Farbstoffen, Süßungsmittel, Füllstoffen, Verdickungsmitteln, Puffern, Pflanzenextrakten, Kaffeeweißer, Bleichmittel, Aromaverstärker, Nahrungsergänzungsmitteln, wie Mineralien und/oder Ballaststoffe, Sacchariden, Tee-Extrakte, Kakao.
